# EUROPÄISCHE PATENTANMELDUNG

(11) **EP 3 866 386 A1**
(43) Veröffentlichungstag der Anmeldung: **18.08.2021**
(21) Anmeldenummer: 20157153.6
(22) Anmeldetag: 13.02.2020
(51) Int. Cl.: H04L 9/08, H04L 9/14, H04L 29/06

(54) **VERFAHREN, VORRICHTUNG UND COMPUTERPROGRAMMPRODUKT ZUR ANWENDUNG EINES KRYPTOGRAPHISCHEN VERFAHRENS**

(71) Anmelder: Siemens Aktiengesellschaft, 80333 München (DE)
(72) Erfinder: Falk, Rainer, 85586 Poing (DE); Fries, Steffen, 85598 Baldham (DE)

(57) **Zusammenfassung**

Computerimplementiertes Verfahren zur Anwendung eines kryptographischen Verfahrens, das einem zur Authentisierung eines Geräts genutzten Zertifikats zugeordnet ist, zur kryptographischen Absicherung einer Kommunikationsverbindung oder einer Nachricht des Geräts mit den Schritten:
- Einlesen (S1) eines mit dem Zertifikat gekoppelten Regelwerks zeitlich vor einer Anwendung eines kryptographischen Verfahrens für eine kryptographische Absicherung der Kommunikationsverbindung oder der Nachricht, wobei das Regelwerk mindestens ein Nutzungskriterium für dem Zertifikat zugeordnete kryptographische Verfahren umfasst,
- Selektieren (S2) eines der dem Zertifikat zugeordneten kryptographischen Verfahren,
- Ermitteln (S3) einer Gültigkeit des selektierten kryptographischen Verfahrens anhand des mindestens einen Nutzungskriteriums des Regelwerks,
und
- Anwenden (S4) des kryptographischen Verfahrens abhängig von der Gültigkeit zur kryptographischen Absicherung der Kommunikationsverbindung oder der Nachricht des Geräts.

## Beschreibung

Die Erfindung betrifft ein computerimplementiertes Verfahren und eine Vorrichtung zur Anwendung eines kryptographischen Verfahrens, das einem zur Authentisierung eines Geräts genutzten Zertifikats zugeordnet ist, zur kryptographischen Absicherung einer Kommunikationsverbindung oder einer Nachricht eines Geräts, eine Datenstruktur zur Verwendung als Zertifikatserweiterung für ein Zertifikat und ein Computerprogrammprodukt.

Zertifikate, beispielsweise X.509 Zertifikate, und dazugehörige kryptographische Schlüssel können in vielfältigen Anwendungsfällen genutzt werden, um beispielsweise Geräte zu authentisieren und/oder um über eine digitale Signatur die Integrität von Daten sicherzustellen. Zertifikate werden in der Regel von einer Zertifizierungsinstanz ausgestellt und umfassen einen öffentlichen Schlüssel, der durch die Signatur des Ausstellers an eine Identität gebunden ist. Die dabei verwendeten Algorithmen umfassen beispielsweise RSA, DSA oder ECDSA mit verschiedenen Schlüssellängen. Diese Algorithmen sind allerdings gefährdet, sobald ausreichend leistungsfähige Quantencomputer verfügbar sind und können dann nicht länger als sicher betrachtet werden. Auch können neue algorithmische Angriffe gegen heute verwendete kryptographische Algorithmen dazu führen, dass auf neue kryptographische Algorithmen gewechselt werden muss. Um eine Sicherheit einer zertifikatsbasierten Anwendung eines Geräts zu gewährleisten, ist es wünschenswert, ein in einem Zertifikat genutztes kryptographisches Verfahren durch einen Post-Quanten-Cryptoalgorithmus dynamisch zu ersetzen bzw. einen alternativen Schlüssel im Zertifikat bereitzustellen.

Es ist bekannt, alternatives Schlüsselmaterial beispielsweise mittels hybrider Zertifikate oder sogenannter Composite Certificates zu transportieren. Die Konfiguration eines Geräts erfolgt dabei allerdings in der Regel individuell, d.h. die erlaubten kryptographischen Verfahren sind explizit auf einem Gerät definiert. Alternativ kann eine Regelung (engl. Policy) zur Konfiguration eines kryptographischen Algorithmus direkt an ein Gerät übermittelt werden, wie z.B. als Erweiterung des TLS-Protokolls. Eine solche Erweiterung erlaubt das dynamische Umschalten auf eine andere Policy als die Geräte-Default-Policy im Kontext eines Verbindungsaufbaus.

Es ist daher die Aufgabe der Erfindung, eine Migration von einem in einem Zertifikat verwendeten kryptographischen Verfahren zu einem anderen, insbesondere stärkeren, kryptographischen Verfahren zu vereinfachen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zur Anwendung eines kryptographischen Verfahrens, das einem zur Authentisierung eines Geräts genutzten Zertifikat zugeordnet ist, zur kryptographischen Absicherung einer Kommunikationsverbindung oder einer Nachricht des Geräts mit den Schritten:
- Einlesen eines mit dem Zertifikat gekoppelten Regelwerks zeitlich vor einer Anwendung eines kryptographischen Verfahrens für eine kryptographische Absicherung der Kommunikationsverbindung oder der Nachricht, wobei das Regelwerk mindestens ein Nutzungskriterium für dem Zertifikat zugeordnete kryptographische Verfahren umfasst,
- Selektieren eines der dem Zertifikat zugeordneten kryptographischen Verfahren,
- Ermitteln einer Gültigkeit des selektierten kryptographischen Verfahrens anhand des mindestens einen Nutzungskriteriums des Regelwerks,
   und
- Anwenden des kryptographischen Verfahrens abhängig von der Gültigkeit zur kryptographischen Absicherung der Kommunikationsverbindung oder der Nachricht des Geräts.

Es ist ein Vorteil der vorliegenden Erfindung, dass ein Regelwerk, das auch als Policy oder Security Policy bezeichnet werden kann, mit einem zur Authentisierung eines Geräts oder eines Nutzers genutzten Zertifikats gekoppelt ist, wobei anhand des Regelwerks die Zulässigkeit eines kryptographischen Verfahrens bestimmt werden kann. Das kryptographische Verfahren kann zur Absicherung einer Kommunikationsverbindung oder einer Nachricht eines Geräts genutzt werden. Die Absicherung einer Kommunikationsverbindung kann sowohl die initiale Aushandlung der Sicherheitsparameter für die Verbindung als auch den Schutz der eigentlichen Nutzdaten umfassen. Die Nachricht eines Gerätes kann z.B. eine Nachricht im Kontext einer Kommunikationsverbindung oder ein Konfigurationsdatum sein, wie z.B. ein Firmware/Software-Update. Insbesondere kann es sich auch um eine Nachricht, die an das Gerät übermittelt wird, handeln. Das Regelwerk kann insbesondere dem Zertifikat zugeordnet sein. Somit ist eine Information direkt mit dem Zertifikat gekoppelt bzw. diesem zugeordnet, wobei diese Information bestimmt, welches kryptographische Verfahren zur Absicherung einer Kommunikationsverbindung oder einer Nachricht genutzt werden kann. Ein kryptographisches Verfahren bzw. ein kryptographischer Algorithmus kann dabei insbesondere ein Signaturverfahren und/oder ein Verschlüsselungsverfahren sein. Vorzugsweise umfasst das Zertifikat mehr als ein kryptographisches Verfahren und dazugehörige Schlüssel und Parameter, die zur Absicherung einer Kommunikationsverbindung oder einer Nachricht genutzt werden können. Das Regelwerk umfasst mindestens ein Nutzungskriterium eines oder mehrerer kryptographischer Verfahren oder einer Kombination von kryptographischen Verfahren, wie zum Beispiel einen Gültigkeitszeitraum, in dem ein kryptographisches Verfahren gültig ist. Es wird das kryptographische Verfahren zur Absicherung der Kommunikationsverbindung oder der Nachricht des Geräts angewandt, welches gemäß dem Regelwerk gültig ist.

Somit kann dynamisch von einem kryptographischen Verfahren auf ein anderes kryptographisches Verfahren migriert werden. Das Regelwerk für diese Migration ist vorteilhaft dem Zertifikat selbst zugeordnet. Eine explizite Konfiguration des Geräts, damit weitere Schlüssel und kryptographische Verfahren unterstützt werden, ist somit nicht notwendig. Die Gültigkeit eines mit einem Zertifikat genutzten kryptographischen Verfahrens wird durch das mit dem Zertifikat gekoppelten Regelwerk bestimmt.

In einer vorteilhaften Ausführungsform kann ein zweites kryptographisches Verfahren anstatt des zuvor selektierten kryptographischen Verfahrens selektiert werden, wenn das zuvor selektierte kryptographische Verfahren gemäß dem Regelwerk ungültig ist,
- die Gültigkeit des zweiten kryptographischen Verfahrens kann anhand des mindestens einen Nutzungskriteriums des Regelwerks ermittelt werden,
   und
- das zweite kryptographische Verfahren kann abhängig von der Gültigkeit zur kryptographischen Absicherung der Kommunikationsverbindung oder der Nachricht des Geräts angewandt werden.

Somit kann insbesondere auf ein zweites kryptographisches Verfahren migriert werden, wenn das erste gemäß dem Regelwerk nicht oder nicht mehr gültig ist und wenn das zweite kryptographische Verfahren gemäß dem Regelwerk gültig ist. Beispielsweise kann damit auf Post-Quanten-Algorithmen zur Absicherung einer Kommunikationsverbindung oder einer Nachricht umgestellt werden.

In einer weiteren Ausführungsform kann das Regelwerk als Zertifikatserweiterung des Zertifikats realisiert und derart mit dem Zertifikat gekoppelt werden.

Das Regelwerk kann insbesondere als Zertifikatserweiterung (engl. Certificate Extension) des zur Authentisierung genutzten Zertifikats realisiert werden.

In einer alternativen Ausführungsform kann das Regelwerk als Referenzdatenstruktur realisiert und derart mit dem Zertifikat gekoppelt werden.

Die Referenzdatenstruktur ist dabei vorzugsweise ebenfalls kryptografisch bezüglich ihrer Integrität gesichert. Dies kann z.B. durch eine digitale Signatur realisiert werden. Das Regelwerk kann beispielsweise als Referenz auf das Regelwerk übertragen werden. Dazu kann beispielsweise in einer Zertifikatserweiterung eine URI (engl. "uniform resource identifier") zu dem entsprechenden Regelwerk angegeben werden. Somit kann auf Systemebene dynamisch festgelegt werden, zu welchen Bedingungen ein kryptographischer Algorithmus genutzt werden kann bzw. eine Migration auf einen anderen kryptographischen Algorithmus erfolgen soll.

In einer weiteren Ausführungsform kann das zweite kryptographische Verfahren ein stärkeres kryptographisches Verfahren als das zuerst selektierte kryptographische Verfahren darstellen.

Vorzugsweise wird auf ein stärkeres kryptographisches Verfahren gewechselt, wenn das zuerst selektierte kryptographische Verfahren gemäß dem Regelwerk nicht gültig ist.

In einer weiteren Ausführungsform kann das Regelwerk eine erste Gültigkeitsdauer für das zuerst selektierte kryptographische Verfahren und eine zweite Gültigkeitsdauer für das zweite kryptographische Verfahren umfassen und die erste Gültigkeitsdauer und die zweite Gültigkeitsdauer können sich zeitlich überschneiden.

Ein Nutzungskriterium kann insbesondere die Gültigkeitsdauer eines kryptographischen Verfahrens definieren. Somit kann ein schrittweiser Übergang von der Nutzung eines ersten kryptographischen Verfahrens auf ein zweites kryptographisches Verfahren erzielt werden.

In einer weiteren Ausführungsform kann das zweite kryptographische Verfahren ein Post-Quanten-Verschlüsselungsverfahren sein.

Gemäß einem zweiten Aspekt betrifft die Erfindung eine Datenstruktur zur Verwendung als Zertifikatserweiterung für ein Zertifikat, das zur Authentisierung eines Geräts genutzt wird, wobei die Zertifikatserweiterung ein Regelwerk umfasst, das mindestens ein Nutzungskriterium für mindestens ein dem Zertifikat zugeordnetes kryptographisches Verfahren umfasst, wobei die Datenstruktur derart eingerichtet ist,
- eine Gültigkeit eines selektierten kryptographischen Verfahrens anhand des mindestens einen Nutzungskriteriums des Regelwerks zu ermitteln,
   und
- das selektierte kryptographische Verfahren gemäß dem Regelwerk zur kryptographischen Absicherung der Kommunikationsverbindung oder der Nachricht des Geräts anzuwenden.

Gemäß einem weiteren Aspekt betrifft die Erfindung eine Vorrichtung zur Anwendung eines kryptographischen Verfahrens, das einem zur Authentisierung eines Geräts genutzten Zertifikats zugeordnet ist, zur kryptographischen Absicherung einer Kommunikationsverbindung oder einer Nachricht des Geräts. Die Vorrichtung umfasst:
- eine Eingabeeinheit, die derart eingerichtet ist, ein mit dem Zertifikat gekoppeltes Regelwerk zeitlich vor einer Anwendung eines kryptographischen Verfahrens für eine kryptographische Absicherung der Kommunikationsverbindung oder der Nachricht des Geräts einzulesen, wobei das Regelwerk mindestens ein Nutzungskriterium für dem Zertifikat zugeordnete kryptographische Verfahren umfasst,
- eine Selektionseinheit, die derart eingerichtet ist, eines der dem Zertifikat zugeordneten kryptographischen Verfahren zur kryptographischen Absicherung der Kommunikationsverbindung oder der Nachricht eines Geräts zu selektieren,
- eine Analyseeinheit, die derart eingerichtet ist, eine Gültigkeit des selektierten kryptographischen Verfahrens anhand des mindestens einen Nutzungskriteriums des Regelwerks zu ermitteln,
   und
- eine Applikationseinheit, die derart eingerichtet ist, das kryptographische Verfahren abhängig von der Gültigkeit zur kryptographischen Absicherung einer Kommunikationsverbindung oder einer Nachricht des Geräts anzuwenden.

Die Vorrichtung kann insbesondere mindestens einen Prozessor und/oder einen Speicher umfassen. Die Einheiten der Vorrichtungen können insbesondere als Hardware und/oder Software realisiert sein. Weiter kann die Vorrichtung als Teil des Geräts oder als separate Vorrichtung realisiert werden. Beispielsweise kann die Vorrichtung ein IoT-Gerät sein oder das IoT-Gerät kann die Vorrichtung umfassen.

In einer Ausführungsform der Vorrichtung kann die Selektionseinheit derart eingerichtet sein, ein zweites kryptographisches Verfahren anstatt des zuvor selektierten kryptographischen Verfahrens zu selektieren, wenn das selektierte kryptographische Verfahren gemäß dem Regelwerk ungültig ist.

Die Selektionseinheit kann somit derart eingerichtet sein, ein weiteres im Zertifikat genutztes kryptographisches Verfahren zu selektieren, wenn die Analyseeinheit das zuvor selektierte kryptographische Verfahren gemäß dem mit dem Zertifikat gekoppelten Regelwerk als ungültig erklärt hat.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Verfahrens, der erfindungsgemäßen Datenstruktur und erfindungsgemäßen Vorrichtung sind in den Zeichnungen beispielhaft dargestellt und werden anhand der nachfolgenden Beschreibung näher erläutert. Es zeigen:
- Fig. 1:: ein Ausführungsbeispiel des erfindungsgemäßen Verfahrens als Ablaufdiagramm;
- Fig. 2:: ein weiteres Ausführungsbeispiel des erfindungsgemäßen Verfahrens als Ablaufdiagramm;
- Fig. 3:: ein Ausführungsbeispiel der erfindungsgemäßen Vorrichtung und der erfindungsgemäßen Datenstruktur in schematischer Darstellung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

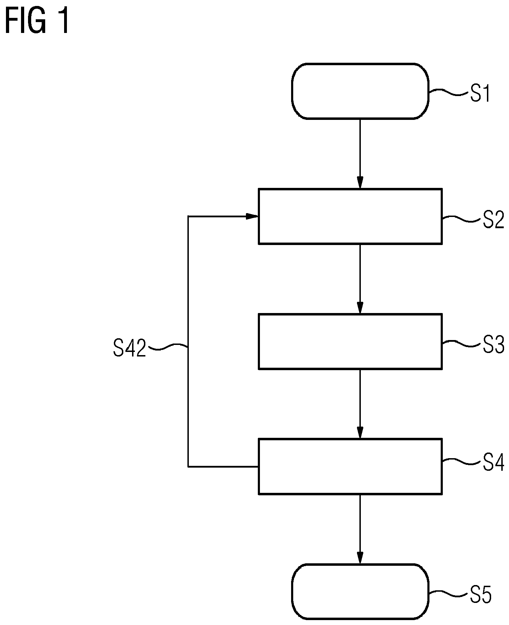

Figur 1 zeigt ein Ausführungsbeispiel des erfindungsgemäßen Verfahrens zur Anwendung eines kryptographischen Verfahrens, das einem zur Authentisierung eines Geräts oder eines Nutzers genutzten Zertifikats zugeordnet ist, zur kryptographischen Absicherung einer Kommunikationsverbindung oder einer Nachricht des Geräts oder des Nutzers als Ablaufdiagramm. Das zur Authentisierung genutzte Zertifikat ist dem Gerät oder dem Nutzer zugeordnet. Beispielsweise ist das Zertifikat auf dem Gerät gespeichert.

Das Zertifikat umfasst vorzugsweise eine Zertifikatserweiterung, die ein Regelwerk umfasst, welches mindestens ein Nutzungskriterium für kryptographische Verfahren, die dem Zertifikat zugeordnet sind, aufweist. Alternativ umfasst das Zertifikat eine Referenz auf das Regelwerk. Somit ist das Regelwerk dem Zertifikat zugeordnet bzw. mit diesem gekoppelt.

Im ersten Schritt S1 des computerimplementierten Verfahrens zur Anwendung eines kryptographischen Verfahrens zur kryptographischen Absicherung einer Kommunikationsverbindung oder einer Nachricht eines Geräts oder eines Nutzers wird das dem Zertifikat zugeordnete Regelwerk eingelesen. Das Regelwerk wird vorzugsweise zeitlich vor einer Verwendung eines kryptographischen Verfahrens für eine kryptographische Absicherung der Kommunikationsverbindung oder der Nachricht eingelesen.

Das Regelwerk umfasst mindestens ein Nutzungskriterium für mindestens ein kryptographisches Verfahren. Das Nutzungskriterium kann beispielsweise auf eine Dauer oder Periode, eine Richtigkeit oder eine Anwendbarkeit des jeweiligen kryptographischen Verfahrens gerichtet sein. Somit wird über das mit dem Zertifikat gekoppelte Regelwerk festgelegt, welches kryptographische Verfahren zu welcher Bedingung genutzt werden kann.

Das Regelwerk kann beispielsweise eine erste Gültigkeitsdauer für ein zuerst selektiertes kryptographisches Verfahren und eine zweite Gültigkeitsdauer für ein zweites kryptographische Verfahren umfassen, wobei die erste Gültigkeitsdauer und die zweite Gültigkeitsdauer sich zeitlich überschneiden. Damit kann insbesondere ein schrittweiser Übergang von einem auf ein anderes kryptographisches Verfahren erzielt werden. So kann beispielsweise ein erster Algorithmus für selektierte Operationen auf Empfängerseite noch genutzt werden, wobei aber beispielsweise lokal auf Senderseite bereits der zweite Algorithmus genutzt wird. Dies ermöglicht z.B. einen nahtlosen Übergang von einem kryptographischen Verfahren zu einem anderen.

Im nächsten Schritt S2 wird ein kryptographisches Verfahren, das im Zertifikat hinterlegt ist, und der dazugehörige Schlüssel selektiert. Es kann beispielsweise aus einer Liste von gespeicherten, dem Zertifikat zugeordneten kryptographischen Verfahren ein erstes kryptographisches Verfahren ausgewählt werden. Beispielsweise wird für das Gerät ein erstes kryptographisches Verfahren, wie z.B. DSA, selektiert, um damit die Kommunikationsverbindung oder die Nachricht abzusichern.

Im nächsten Schritt S3 wird anhand des mindestens einen Nutzungskriterium des Regelwerks ermittelt, ob das selektierte kryptographische Verfahren gültig ist, d.h. es wird ermittelt, ob das kryptographische Verfahren gemäß dem mindestens einen Nutzungskriterium zur Absicherung der Kommunikationsverbindung oder der Nachricht des Geräts verwendet werden darf.

Im nächsten Schritt S4 wird das selektierte kryptographische Verfahren zur Absicherung der Kommunikationsverbindung oder der Nachricht des Geräts angewandt, wenn das kryptographische Verfahren gemäß dem Regelwerk gültig ist. Anschließend wird die Kommunikationsverbindung oder die Nachricht des Geräts mittels des kryptographischen Verfahrens abgesichert, Schritt S5.

Wenn das selektierte kryptographische Verfahren gemäß dem Regelwerk ungültig ist, wird ein zweites kryptographisches Verfahren selektiert und angewandt, wenn das zweite kryptographische Verfahren gemäß dem Regelwerk gültig ist, Schritt S42. Dieser Selektions- und Prüfprozess kann iterativ auf weitere kryptographische Verfahren, die dem Zertifikat zugeordnet sind, angewandt werden, bis ein gültiges Verfahren selektiert, als gültig erklärt und anschließend angewandt wird.

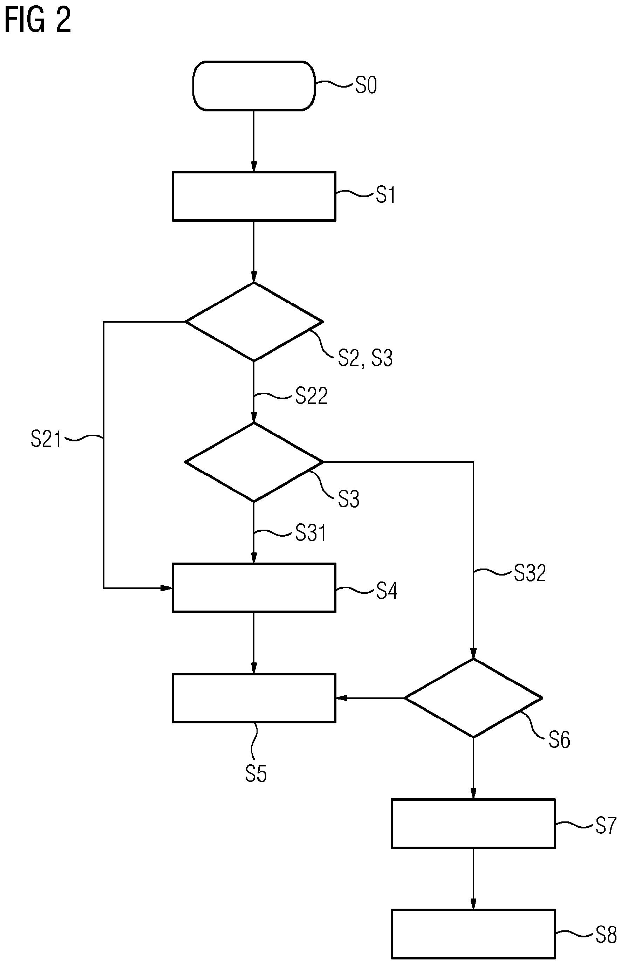

Figur 2 zeigt ein weiteres Ausführungsbeispiel des erfindungsgemäßen Verfahrens zur Anwendung eines kryptographischen Verfahrens, das einem zur Authentisierung eines Geräts genutzten Zertifikats zugeordnet ist, zur kryptographischen Absicherung einer Kommunikationsverbindung oder einer Nachricht des Geräts. Das Zertifikat kann beispielsweise ein X.509 Zertifikat sein, das mittels einer erfindungsgemäßen Zertifikatserweiterung, die mindestens ein Nutzungskriterium für mindestens ein dem Zertifikat zugeordnetes kryptographisches Verfahren umfasst, ergänzt wird. Im Falle von X.509 werden zwei Zertifikatstypen unterschieden, Public Key Zertifikate und Attribut Zertifikate, die beide mit den entsprechenden Erweiterungen realisiert werden können.

Nach dem Standard X.509 (siehe X.509 10/2019) ist ein Public Key Zertifikat in ASN.1 wie folgt definiert:

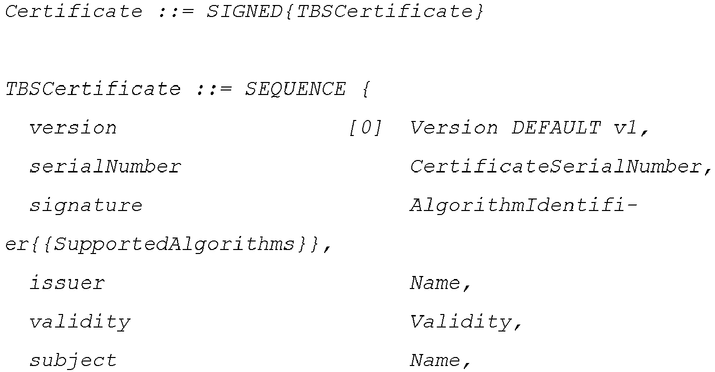

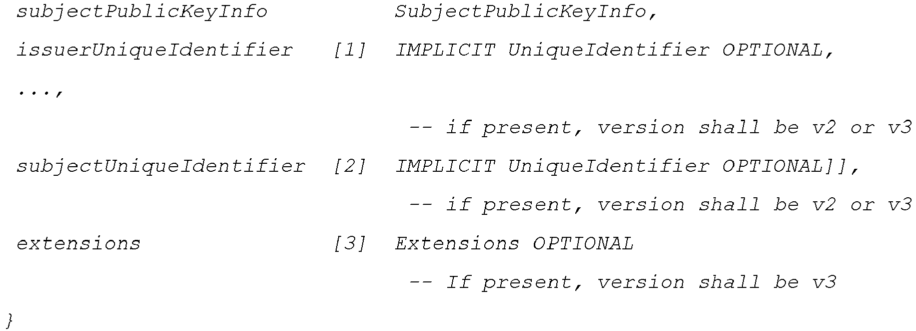

Insbesondere kann nach dem Standard X.509 (siehe X.509 10/2019) eine Nutzungszeitdauer wie folgt definiert sein:

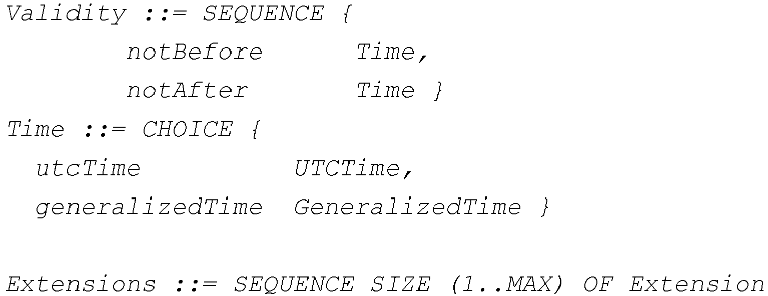

Nach X.509 (siehe X.509 10/2019) ist ein Attribut-Zertifikat in ASN.1 wie folgt definiert:

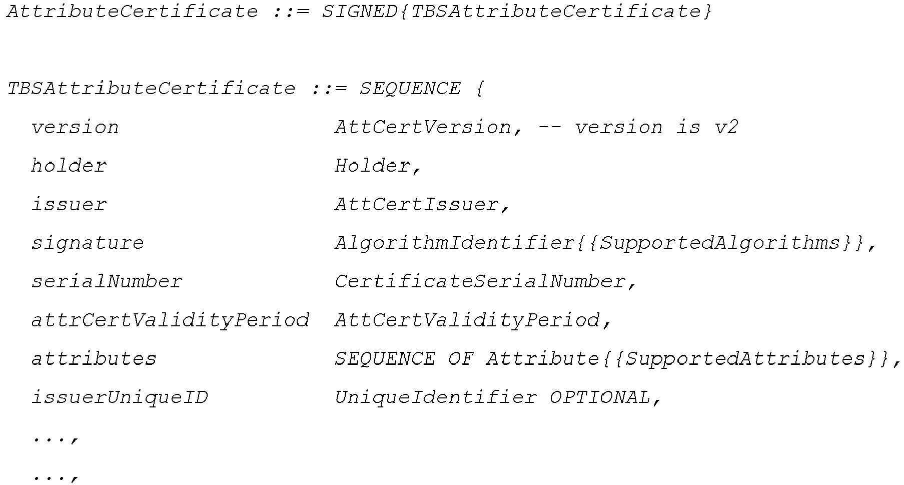

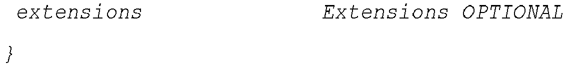

Eine Komponente des Attribut-Zertifikates im Kontext der Erfindung ist wie folgt definiert:

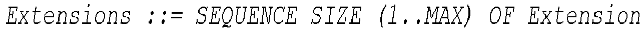

Mit dieser Definition wird ermöglicht, im Zertifikat mehrere Erweiterungen zu transportieren.

Nach X.509 (siehe X.509 10/2019) sind alternative Signaturerweiterungen zur Kennzeichnung von Algorithmen und alternative Signaturwerte zum Transport der eigentlichen Signatur wie folgt definiert:

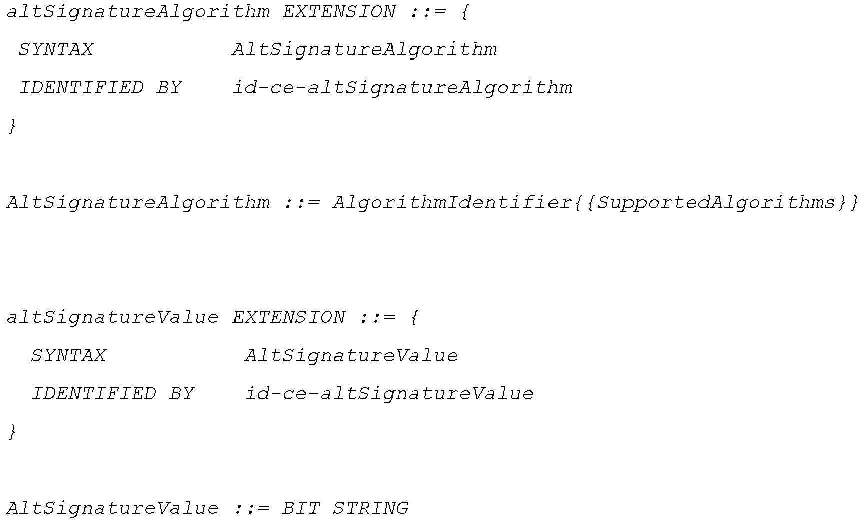

Mit diesen Erweiterungen ist es möglich eine existierende X.509 Zertifikatsstruktur um zusätzliche kryptographische Algorithmen zu erweitern, die dazu genutzt werden können das Zertifikat zu signieren. Dies resultiert in einem Zertifikat mit mehreren Signaturen, die durch die referenzierten Signaturalgorithmen berechnet werden.

Ein solches Zertifikat kann mit einer Datenstruktur zur Verwendung als Zertifikatserweiterung erweitert werden, wobei die Zertifikatserweiterung ein Regelwerk umfasst, das mindestens ein Nutzungskriterium für mindestens ein dem Zertifikat zugeordnetes kryptographisches Verfahren umfasst. Diese Datenstruktur ist eingerichtet, eine Gültigkeit eines selektierten kryptographischen Verfahrens anhand des mindestens einen Nutzungskriteriums des Regelwerks zu ermitteln, so dass das selektierte kryptographische Verfahren zur kryptographischen Absicherung der Kommunikationsverbindung oder der Nachricht des Geräts angewandt wird, wenn das selektierte kryptographische Verfahren gemäß dem Regelwerk gültig ist.

So kann für die Umsetzung des Regelwerks zum Umschalten der verwendeten kryptographischen Algorithmen und Schlüssel auf der Seite des Überprüfers des Zertifikates auf stärkere (stronger crypto, SC) die Zertifikatserweiterung wie folgt definiert sein:

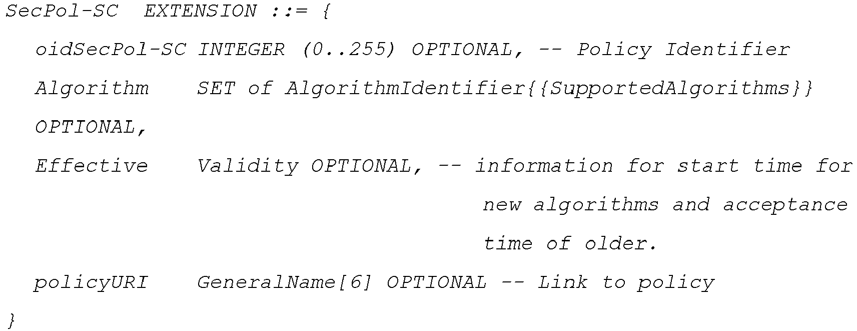

Mittels einer solchen Datenstruktur kann die Gültigkeit (Validity) eines selektierten kryptographischen Verfahrens anhand mindestens einen Nutzungskriteriums des Regelwerks (Policy) ermittelt werden. Das Regelwerk kann beispielsweise als Referenz (policyURI) angegeben werden.

In der Erweiterung kann ein Satz von neuen oder stärkeren Algorithmen mittels der Beschreibung durch eine OID und ggf. weiterer Parameter transportiert werden. Über die Struktur "Effective" kann weiterhin ein Startdatum für die Verwendung vorgegeben werden (notBefore). Mittels des Parameters "notAfter" kann ebenso ein Enddatum für den genutzten, noch aktuellen Algorithmus angegeben werden.

Figur 2 zeigt einen Ablaufplan, der die Anwendung eines solchen Zertifikats mit einer Zertifikatserweiterung mit Regelwerk (Security Policy Extension) darstellt.

Bei einem Verbindungsaufbau einer Kommunikationsverbindung wird beispielsweise ein Gerät mittels des Zertifikats authentisiert. Dazu wird im Schritt S0 das dem Gerät zugeordnete Zertifikat eingelesen. Im nächsten Schritt S1 wird die oben beschriebene Zertifikatserweiterung des Zertifikats, die ein Regelwerk umfasst, eingelesen. Zur Absicherung der Kommunikationsverbindung wird ein kryptographisches Verfahren selektiert und anhand des Regelwerks wird geprüft, ob dieses kryptographische Verfahren gültig ist, Schritt S2 und S3.

Wenn das kryptographische Verfahren gemäß dem Regelwerk gültig ist, Pfad S21, wird dieses zur Absicherung der Kommunikationsverbindung angewandt, Schritt S4. Anschließend kann die abgesicherte Kommunikationsverbindung genutzt werden, Schritt S5.

Wenn das selektierte kryptographische Verfahren nicht gültig ist, wird ein zweites kryptographisches Verfahren selektiert, Pfad S22. Es handelt sich beim zweiten kryptographischen Verfahren vorzugsweise um ein stärkeres kryptographisches Verfahren, wie z.B. ein Post-Quanten-Verschlüsselungsverfahren. Anhand des mindestens einen Nutzungskriteriums des Regelwerks wird anschließend, Schritt S3, geprüft, ob dieses zweite kryptographische Verfahren gültig ist und somit zur Absicherung genutzt werden kann. Wenn das zweite kryptographische Verfahren gemäß dem Regelwerk gültig ist, Pfad S31, wird das zweite kryptographische Verfahren zur Absicherung der Kommunikationsverbindung angewandt, Schritt S4.

Wenn das zweite kryptographische Verfahren gemäß dem Regelwerk nicht gültig ist, Pfad S32, kann ein weiteres und/oder das zuvor selektierte kryptographische Verfahren selektiert und gemäß dem Regelwerk geprüft werden, Schritt S6.

Ist beispielsweise keines der dem Zertifikat zugeordneten kryptographischen Verfahren gemäß dem Regelwerk gültig, kann eine Fehlermeldung ausgegeben werden, Schritt S7, und die Kommunikationsverbindung beendet werden, Schritt S8.

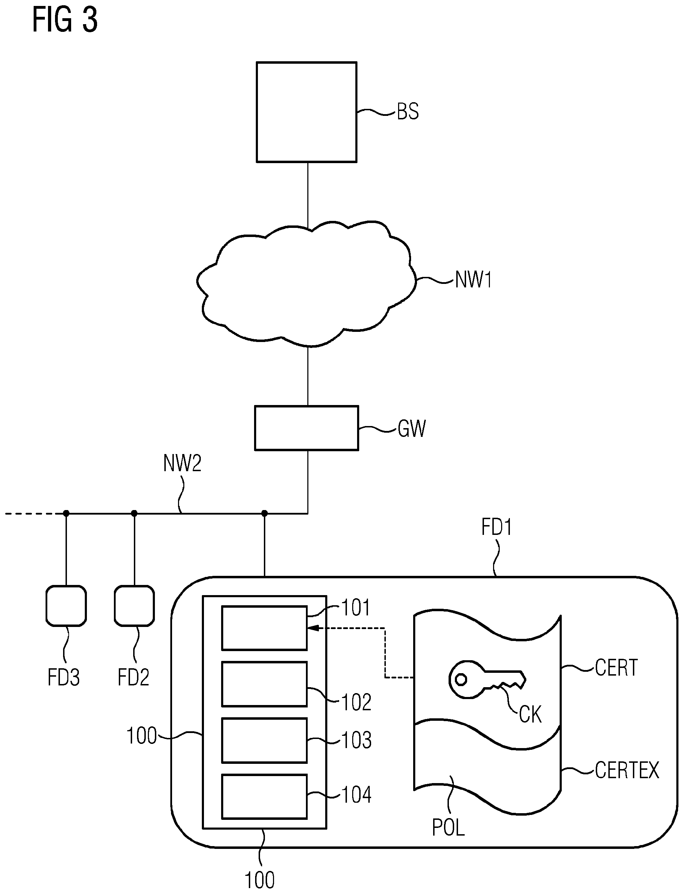

Figur 3 zeigt ein Ausführungsbeispiel der erfindungsgemäßen Vorrichtung und der erfindungsgemäßen Datenstruktur in schematischer Darstellung.

Es ist ein Anwendungsfall für eine Migration von einem ersten kryptographischen Verfahren auf ein zweites kryptographisches Verfahren mittels einer Zertifikatserweiterung, wie beispielhaft anhand Figur 2 erläutert, gezeigt.

Es ist ein Automatisierungsnetzwerk NW2 mit mehreren Feldgeräten FD1, FD2, FD3 gezeigt. Ein Feldgerät kann beispielsweise ein IoT-Gerät (Internet of Things, kurz IoT) sein. Über ein Gateway GW können die Feldgeräte mit einem Backend-Service BS über ein offenes Netzwerk NW1 verbunden sein. So können die Feldgeräte innerhalb des Automatisierungsnetzes NW2 und/oder über das offene Netzwerk NW1 Daten austauschen. Die Authentisierung zwischen den Feldgeräten erfolgt beispielsweise zertifikatsbasiert, z.B. beim Aufbau einer Kommunikationsverbindung im Rahmen eines Sicherheitsprotokolls.

Ein Feldgerät FD1 kann beispielsweise eine Vorrichtung 100 zur Anwendung eines kryptographischen Verfahrens, das einem zur Authentisierung des Feldgeräts genutzten Zertifikats CERT zugeordnet ist, zur kryptographischen Absicherung einer Kommunikationsverbindung oder einer Nachricht des Feldgeräts, aufweisen. Die Vorrichtung 100 umfasst eine Eingabeeinheit 101, eine Selektionseinheit 102, eine Analyseeinheit 103 und eine Applikationseinheit 104. Des Weiteren kann das Feldgerät FD1 und/oder die Vorrichtung 100 einen Prozessor und/oder einen Speicher umfassen. Alternativ kann die Vorrichtung 100 auch separat vom Feldgerät FD1 realisiert sein.

Dem Feldgerät FD1 ist das Zertifikat CERT zugeordnet. Beispielsweise ist das Zertifikat CERT auf dem Feldgerät FD1 gespeichert. Die Eingabeeinheit 101 ist derart eingerichtet, ein mit dem Zertifikat CERT gekoppeltes Regelwerk POL, z.B. in Form einer Zertifikatserweiterung CERTEX, zeitlich vor einer Verwendung eines kryptographischen Verfahrens für eine kryptographische Absicherung der Kommunikationsverbindung des Geräts einzulesen. Das Regelwerk POL umfasst mindestens ein Nutzungskriterium für dem Zertifikat CERT zugeordnete kryptographische Verfahren und dazugehörigen Schlüssel CK.

Die Selektionseinheit 102 ist derart eingerichtet, eines der dem Zertifikat zugeordneten kryptographischen Verfahren zur kryptographischen Absicherung der Kommunikationsverbindung oder der Nachricht eines Geräts zu selektieren. Die Analyseeinheit 103 ist derart eingerichtet, die Gültigkeit des selektierten kryptographischen Verfahrens anhand des mindestens einen Nutzungskriteriums des Regelwerks POL zu ermitteln. Die Applikationseinheit 104 ist derart eingerichtet, das kryptographische Verfahren zur kryptographischen Absicherung einer Kommunikationsverbindung oder einer Nachricht des Feldgeräts anzuwenden, wenn das selektierte kryptographische Verfahren abhängig vom Regelwerk POL von der Analyseeinheit als gültig erklärt wurde.

Somit kann für eine Kommunikationsverbindung des Feldgeräts FD1 auf beispielsweise stärkere Kryptoalgorithmen und/oder längeres Schlüsselmaterial migriert werden. Durch die Verwendung einer Referenz auf das Regelwerk POL im Zertifikat CERT statt einem festgelegten Regelwerk POL als Zertifikatserweiterung kann damit auch auf kurzfristige Änderungen reagiert werden. Eine explizite Konfiguration der zugelassenen und/oder gültigen kryptographischen Algorithmen des Feldgeräts FD1 ist somit nicht notwendig.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zur Anwendung eines kryptographischen Verfahrens, das einem zur Authentisierung eines Geräts genutzten Zertifikat (CERT) zugeordnet ist, zur kryptographischen Absicherung einer Kommunikationsverbindung oder einer Nachricht des Geräts mit den Schritten:
- Einlesen (S1) eines mit dem Zertifikat gekoppelten Regelwerks (POL) zeitlich vor einer Anwendung eines kryptographischen Verfahrens für eine kryptographische Absicherung der Kommunikationsverbindung oder der Nachricht, wobei das Regelwerk (POL) mindestens ein Nutzungskriterium für dem Zertifikat zugeordnete kryptographische Verfahren umfasst,
- Selektieren (S2) eines der dem Zertifikat zugeordneten kryptographischen Verfahren,
- Ermitteln (S3) einer Gültigkeit des selektierten kryptographischen Verfahrens anhand des mindestens einen Nutzungskriteriums des Regelwerks,
und
- Anwenden (S4) des kryptographischen Verfahrens abhängig von der Gültigkeit zur kryptographischen Absicherung der Kommunikationsverbindung oder der Nachricht des Geräts.

2. Computerimplementiertes Verfahren nach Anspruch 1, wobei
- ein zweites kryptographisches Verfahren anstatt des zuvor selektierten kryptographischen Verfahrens selektiert wird, wenn das zuvor selektierte kryptographische Verfahren gemäß dem Regelwerk (POL) ungültig ist,
- die Gültigkeit des zweiten kryptographischen Verfahrens anhand des mindestens einen Nutzungskriteriums des Regelwerks ermittelt wird,
und
- das zweite kryptographische Verfahren abhängig von der Gültigkeit zur kryptographischen Absicherung der Kommunikationsverbindung oder der Nachricht des Geräts angewandt wird.

3. Computerimplementiertes Verfahren nach einem der vorhergehenden Ansprüche, wobei das Regelwerk als Zertifikatserweiterung (CERTEX) des Zertifikats realisiert und derart mit dem Zertifikat gekoppelt wird.

4. Computerimplementiertes Verfahren nach einem der Ansprüche 1 oder 2, wobei das Regelwerk als Referenzdatenstruktur realisiert und derart mit dem Zertifikat gekoppelt wird.

5. Computerimplementiertes Verfahren nach einem der vorhergehenden Ansprüche, wobei das zweite kryptographische Verfahren ein stärkeres kryptographisches Verfahren als das zuerst selektierte kryptographische Verfahren darstellt.

6. Computerimplementiertes Verfahren nach einem der vorhergehenden Ansprüche, wobei das Regelwerk (POL) eine erste Gültigkeitsdauer für das zuerst selektierte kryptographische Verfahren und eine zweite Gültigkeitsdauer für das zweite kryptographische Verfahren umfasst und die erste Gültigkeitsdauer und die zweite Gültigkeitsdauer sich zeitlich überschneiden.

7. Computerimplementiertes Verfahren nach einem der vorhergehenden Ansprüche, wobei das zweite kryptographische Verfahren ein Post-Quanten-Verschlüsselungsverfahren ist.

8. Datenstruktur zur Verwendung als Zertifikatserweiterung für ein Zertifikat, das zur Authentisierung eines Geräts genutzt wird, wobei die Zertifikatserweiterung ein Regelwerk umfasst, das mindestens ein Nutzungskriterium für mindestens ein dem Zertifikat zugeordnetes kryptographisches Verfahren umfasst, wobei die Datenstruktur derart eingerichtet ist,
- eine Gültigkeit eines selektierten kryptographischen Verfahrens anhand des mindestens einen Nutzungskriteriums des Regelwerks zu ermitteln,
und
- das selektierte kryptographische Verfahren gemäß dem Regelwerk zur kryptographischen Absicherung der Kommunikationsverbindung oder der Nachricht des Geräts anzuwenden.

9. Vorrichtung (100) zur Anwendung eines kryptographischen Verfahrens, das einem zur Authentisierung eines Geräts genutzten Zertifikat (CERT) zugeordnet ist, zur kryptographischen Absicherung einer Kommunikationsverbindung oder einer Nachricht des Geräts, umfassend:
- eine Eingabeeinheit (101), die derart eingerichtet ist, ein mit dem Zertifikat gekoppeltes Regelwerk (POL) zeitlich vor einer Anwendung eines kryptographischen Verfahrens für eine kryptographische Absicherung der Kommunikationsverbindung oder der Nachricht des Geräts einzulesen, wobei das Regelwerk (POL) mindestens ein Nutzungskriterium für dem Zertifikat zugeordnete kryptographische Verfahren umfasst,
- eine Selektionseinheit (102), die derart eingerichtet ist, eines der dem Zertifikat zugeordneten kryptographischen Verfahren zur kryptographischen Absicherung der Kommunikationsverbindung oder der Nachricht eines Geräts zu selektieren,
- eine Analyseeinheit (103), die derart eingerichtet ist, eine Gültigkeit des selektierten kryptographischen Verfahrens anhand des mindestens einen Nutzungskriteriums des Regelwerks zu ermitteln,
und
- eine Applikationseinheit (104), die derart eingerichtet ist, das kryptographische Verfahren abhängig von der Gültigkeit zur kryptographischen Absicherung einer Kommunikationsverbindung oder einer Nachricht des Geräts anzuwenden.

10. Vorrichtung nach Anspruch 9, wobei die Selektionseinheit eingerichtet ist, ein zweites kryptographisches Verfahren anstatt des zuvor selektierten kryptographischen Verfahrens zu selektieren, wenn das selektierte kryptographische Verfahren gemäß dem Regelwerk ungültig ist.

11. Computerprogrammprodukt umfassend Programmcodeteile, die bei der Ausführung des Programms durch einen Prozessor diesen veranlassen, die Schritte des Verfahrens nach einem der Ansprüche 1 bis 7 auszuführen.
